(19) Europäisches Patentamt

European Patent Office

Office européen des brevets

(11) **EP 1 006 733 B1**

## (12) EUROPEAN PATENT SPECIFICATION

(45) Date of publication and mention
of the grant of the patent:
**16.10.2002 Bulletin 2002/42**

(51) Int Cl.⁷: **H04N 9/16**

(21) Application number: **00200326.7**

(22) Date of filing: **01.02.2000**

(54) **Display device**

Anzeigevorrichtung

Dispositif d'affichage

(84) Designated Contracting States:
**LU**

(43) Date of publication of application:
**07.06.2000 Bulletin 2000/23**

(60) Divisional application:
**02077838.7**

(73) Proprietor: **Koninklijke Philips Electronics N.V.**
**5621 BA Eindhoven (NL)**

(72) Inventor: **Vis, Petrus Nicolaas Joseph**
**Prof. Holstlaan 6, 5656 AA Eindhoven (NL)**

(74) Representative: **Cohen, Julius Simon et al**
**Internationaal Octrooibureau B.V.,**
**Prof. Holstlaan 6**
**5656 AA Eindhoven (NL)**

(56) References cited:
**WO-A-96/19899**          **WO-A-97/19551**
**US-A- 4 745 461**

## Description

The invention pertains to a display device comprising

- a cathode system including a grid and three cathodes for emitting three separate electron beams, each cathode having an individual electron source
- a phosphor screen placed opposite the cathodes
- an electro-magnetic deflection system for scanning at least a part of the phosphor screen with the electron beams and arranged such that the electro-magnetic deflection system converges the three electron beams to a single moveable spot on the phosphor screen
- a cathode modulator having a signal input for receiving an analogue electrical video signal and having an output for applying separate modulation voltages to the respective electron sources of the cathodes relative to the grid.

Such a display device is known from the US patent US 5 712 538.

The known display device comprises a cathode arrangement for emitting a plurality of electron beams. The cathode modulator modulates the electron beams on the basis of an electronic image signal, such as the analogue electronic video signal, which represents an image to be displayed on the phosphor screen. The cathode modulator of the known display device is arranged to modulate the intensities of the respective electron beams according the separate spatial frequency components of the image. In particular, the cathode modulator of the known device is arranged to modulate the individual electron beams on the basis of separate high-frequency and low-frequency components. Although the known display is suitable for displaying images with a high contrast, it appears that small details are not always rendered well visible on the phosphor screen.

An object of the invention is to provide a display device which enables image information to be rendered visible with a higher image quality. In particular it is an object to provide a display device which enables small details with relatively low contrast in the image on the phosphor screen to be very clearly displayed.

This object is achieved according to the invention by a display device characterised in that

- the cathode modulator is provided with three regulable analogue amplifiers
- each regulable analogue amplifier having a signal input for receiving the same analogue electrical video signal
- each regulable analogue amplifier having a signal output for supplying one of said modulation voltages
- each regulable analogue amplifier having a control input, the amplification ratio of each regulable analogue amplifier being regulable on the basis of a regulating signal applied to the control input of said analogue amplifier and in that

- the cathode modulator is provided with an integrator circuit having an input for receiving the analogue electrical video signal and having an output for supplying three regulating signals the integrator circuit being arranged to derive an integrated video signal from the analogue electrical video signal and to derive the three regulating signals from the integrated video signal
- the integrator circuit having its output coupled to the respective control inputs of the three regulable analogue amplifiers so as to apply the respective regulating signals to the respective control inputs of the individual regulable analogue amplifiers.

The individual regulable analogue amplifiers adjust the separate modulation voltages of the three cathodes independently and on the basis of the average brightness of at least a portion of the image. Notably, the regulable analogue amplifiers are adjusted on the basis of the average intensity in a small portion of the image around the spot on the phosphor screen that is currently hit by the three electron beams. Thus, the respective intensities of the three electron beams are controlled independently and on the basis of the average intensities around the spot on the phosphor screen that is currently emitting light, that is on the basis of the local average brightness of the image formed on the phosphor screen. The regulable analogue amplifiers achieve that the intensities of the individual electron beam are adjusted so that accurate convergence of each of the individual electron beams onto the moving spot on the phosphor screen is achieved for a wide range of local brightness values of the image on the phosphor screen. It is also achieved to adjust the intensities of the individual electron beams so as to achieve accurate convergence of the individual electron beams relative to one another onto the moving spot on the phosphor screen. In particular it is avoided that convergence errors of one of the electron beams occur at high intensities of that electron beam when a very bright portion of the image is displayed. In such a situation the required electron intensity at the moving spot on the phosphor screen is according to the invention supplied by the three electron beams together. Dark portions of the image, i.e. portions having a low brightness are displayed by only one of electron beam by which a smaller spot size is achieved as compared to the spot size formed by two or three electron beams.

Preferred embodiments of the display device of the invention are defined in the depending Claims and will be discussed in some detail hereinafter.

Preferably the cathode modulator is provided with three separate regulable DC voltage supplies for the respective cathodes. These regulable DC voltage supplies apply an adjustable electrical potential difference between the respective electron sources of each of the cathodes and the grid of the cathode system. These potential differences accelerate the electrons of the electron beams. According to the invention, the individual DC voltage supplies are independently adjustable on the basis of the integrated video signal, thus on the basis of the local average brightness of the image on the phosphor screen. It appears that the individual adjustments of three DC regulable voltage supplies achieves an even better convergence of the electron beams onto the moving spot on the phosphor screen for a wide range of brightness values of the image. Accordingly the image quality of the image displayed on the phosphor screen is improved relative to the conventional display device. Particularly accurate convergence of the electron beams is achieved by setting for two of the cathodes the regulable amplifiers at a high amplification ratio and the regulable DC voltage supplies to a low DC voltage value and setting for the third cathode the amplification ratio of the adjustable amplifier at a low value and setting the regulable DC voltage supply to a high DC voltage value.

In a further preferred embodiment, the cathode modulator is set such that for display of portions of the image having a low brightness, i.e. rather dark portions of the image, only one of the cathodes is energised to emit an electron beam. Because such dark portions are displayed by only a single electron beam a very good convergence accuracy is achieved. Consequently, small dark details with little contrast in the image are rendered well visible. Particularly favourable results are obtained when only one of the cathodes is energised when the integrated video level is less than a predetermined threshold value of 115mV.

In another preferred embodiment, the cathode modulator is set such that for display of bright portions of the image, all three cathodes are energised. Hence, portions of the image having high brightness values are displayed by three electron beams. Then, these three electron beams require an intensity that is substantially lower than what is required if only one or two electron beams were used and a far better convergence accuracy is achieved. Consequently, small bright details in the image are rendered well visible. Particularly favourable results are obtained when all three cathodes are energised when the integrated video signal exceeds a predetermined ceiling value of 250mV. Furthermore, it is particularly advantageous to employ the features of Claims 3 and 4 in combination so as to achieve good image quality for both dark and bright details in the image on the phosphor screen.

In a further preferred embodiment, the regulable amplifiers and the DC voltage supplies of the three cathodes are set such that for at least two values of the signal level V of the analogue electronic video signal, the light output L at the moving spot on the phosphor screen are related according to the so-called gamma curve with a value of $\gamma$ in the range between 3.35 and 4.09. It has appeared that when at only a few, e.g. two, three or four values of the signal level V, the light output satisfies the gamma curve with $\gamma$ in the range between 3.35 and 4.09 for a wide range of signal levels, e.g. in the range of 0-1000mV such a gamma curve applies to the light output on the phosphor screen. This gamma curve has a $\gamma$ that is substantially higher than that of the conventional display device. It has appeared that the brightness distribution of the image on the phosphor screen generated according to the gamma curve with $\gamma$ in the range between 3.35 and 4.09 is very pleasant for a human to watch. Notably, an image on the phosphor screen with $\gamma$ in this preferred range is quite pleasant for a radiologist for watching medical diagnostic images. The brightness distribution corresponding to the gamma curve with $\gamma$ between 3.35 and 4.09 provides an image that is very well perceived by the human visual system. Consequently, it is very comfortable to watch the image on the display according to the invention and in particular inspection of small details with low contrast in both very bright and very dark images can be sustained for prolonged periods of time without the person, e.g. the radiologist, watching becoming tired for example after 2 hours.

In particular favourable results are achieved by setting the cathode modulator such that for two values of the signal level of the analogue electronic video signal the gamma curve with $\gamma$ in the range between 3.35 and 4.09 is satisfied. It is very simple to achieve such a setting by appropriately setting the regulable amplifiers and DC voltage supplies. Advantageously, the cathode modulator is set such that $\gamma = 3.72$ which appears to be very well compatible with the human visual perception. Further advantageously the cathode modulator is set such that for the signal levels in the respective ranges 180mV-220mV and 360mV-440mV the gamma curve with $\gamma$ in the range between 3.35 and 4.09, preferably with $\gamma=3.72$ is satisfied. Preferably, at signal levels 200mV and 400mV said gamma curve is satisfied. Notably, when the gamma curve is satisfied at signal levels in said ranges, preferably at 200mV and 400mV, the gamma curve is very well approximated for signal levels in the entire range between 0mV and 1000mV in which image information is represented.

In the display device according to the invention the same analogue electronic video signal is applied to all three cathodes. Therefore, the display device according to the invention is notably suitable for displaying monochrome images, such a black-and-white images. These monochrome displays according to the invention are in particular advantageous for the display of medical images, such as x-ray images or magnetic resonance images. Such medical images do not involve colour. Furthermore, it is of the utmost importance to display such medical images with a high diagnostic quality, that is such that small details with low contrast are made well visible, so that for example an image of a tumour in an early stage of the pathology can be seen in the image on the phosphor screen.

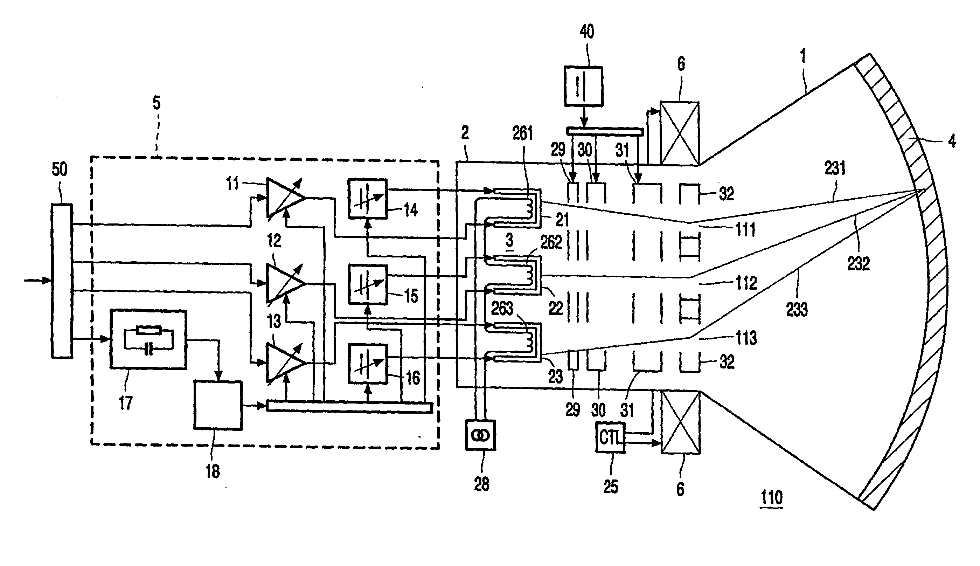

These and other aspects of the invention will be elucidated with reference to the embodiments described hereinafter and with reference to the accompanying drawing wherein

The Figure shows diagrammatically an embodiment of a display device in accordance with the invention.

The Figure shows diagrammatically an embodiment of a display device in accordance with the invention. The cathode ray tube 110 comprises an evacuated envelope 1. In a neck 2 of the envelope there is arranged a cathode system 3. The three individual electron sources 21, 22, and 23 comprise respective filaments 261, 262 and 263 which are coupled to a current supply unit 28. The three electron sources 21,22 and 23 emit electron beams 231. 232 and 233 which are directed, by a deflection system 6, onto substantially the same position on a phosphor screen 4 provided opposite the neck 2 inside the envelope 1. The deflection system 6 comprises deflection coils wherethrough an electric current is applied under the control of a control unit 25. By absorption of the electron beams in the phosphor material, light of an intensity which is dependent on the intensity of the electron beams is locally generated in the phosphor screen. The cathode material of the electron sources is heated by applying an electric current through the filaments 261, 262 and 263, with the result that the cathode material emits electrons. The cathode system furthermore comprises a number of electrodes for forming the emitted electrons into electron beams. The electrodes are each provided with three openings for the passage of the three electron beams. In front of the cathodes there is arranged an acceleration electrode 30 whereto an electric cathode voltage of approximately 0.7 kV is applied by a voltage source 40. A grid 29 is arranged between the electron sources 21,22 and 23 and the acceleration electrode 30. The electron sources 21, 22, 23, the grid 29 and the acceleration electrode 30 operate as a triode and the intensity of the electron beams is controlled on the basis of a small voltage difference of a few tens of volts between the individual electron sources and the grid 29. The cathode system also comprises a focusing electrode 31 and an anode 32, carrying a high voltage of approximately 25 kV, for further acceleration of the electron beams and for focusing these beams on the phosphor screen. The electron beams emanate from the cathode system via three exit openings 111,112 and 113. The foregoing concerns a comparatively simple embodiment of the cathode system 3 and to those skilled in the art it will be evident that more complex configurations of electrodes can be used in the cathode system, for example to enhance the properties of the electron beams, if desired. The cathode system can be designed so that the individual electron sources and the electrodes are optimally arranged for precision focusing of electron beams onto the phosphor screen.

In the embodiment shown in the Figure, the electronic video signal is received at a signal input 50 of the cathode modulator 5. The signal input applies the electronic video signal to the three analogue adjustable amplifiers 11,12,13 and the three electron sources 21,22,23 are modulated by the three respective modulation signals supplied by the respective analogue adjustable amplifiers. The display device in accordance with the invention is attractively constructed so as to comprise a vacuum envelope I of a standard colour picture tube. In the neck of such a colour picture tube there is sufficient space to accommodate a cathode system comprising three electron sources. Even, in a commercially available display device, there are often provided three electron sources.

In order to modulate the intensity of the electron beams, the cathode ray tube 110 comprises a cathode modulator 5 which is coupled to the individual electron sources 21, 22 and 23 of the cathode system 3. The cathode modulator 5 modulates the voltage differences between the grid 29 and the respective electron sources 21, 22, 23; the intensities of the electron beams 231, 232 and 234 are independently modulated on the basis of the modulation of these voltage differences. The voltage differences between the individual cathodes and the grid are modulated with the respective modulation signals from the respective analogue adjustable amplifiers.

Furthermore, the cathode modulator 5 is provided with three regulable DC voltage supplies 14,15 and 16. The respective voltage supplies are electrically connected to the individual electron sources 21,22,23 of the cathode system 3. These regulable voltage supplies regulate the potential difference between each of the electron sources and the grid 29. The DC components of the respective intensities of the electron beams 231,232 and 233 are controlled mainly independently of one another by the individual DC voltages applied to the respective electron sources 21,22,23 from the regulable DC voltage supplies 14,15,16.

Both the regulable analogue amplifiers 11,12,13 and the regulable DC voltage supplies 14,15,16 are controlled on the basis of the local average brightness of the image that is being displayed, i.e. generated on the phosphor screen 4. To this end, the cathode modulator 5 is provided with an integrator circuit 17. The integrator circuit 17 receives the electronic video signal from the signal input 50. The integrator circuit 17 produces an integrated signal of which the signal level represents the average local brightness. Preferably, the average local brightness is taken around the current position of the moving spot on the phosphor screen. To achieve this the integrator circuit is set such that a portion of the electronic video signal is integrated that corresponds to the relevant portion of the image. As an alternative, the regulable analogue amplifiers and the regulable DC voltage supplies may be adjusted on the basis of the global average brightness over the entire image. To that end the integrator circuit is then set up to first compute the average signal level of the complete electronic video signal before the cathode system is activated. This is conveniently achieved by having a hold circuit incorporated in the signal input 50 so that the signal input can first apply the electronic video signal to the integrator circuit 17 and subsequently and with a suitable delay to the regulable analogue amplifiers so as to energise the electron sources 21,22,23. The integrated signal is supplied to a conversion circuit 18 which derives suitable regulating signals from the integrated signal. The regulating signals from the conversion circuit are applied to the respective control inputs of the regulable analogue amplifiers 11,12,13 and to the regulable DC voltage supplies 14,15,16. The conversion circuit for example is fitted with amplifier circuits to amplify or reduce the signal levels of the respective control signals so as to achieve the desired setting of the regulable analogue amplifiers 11,12,13 and of the respective regulable DC voltage supplies 14,15,16.

The electron sources 21,22,23 emit electron beams which scan substantially the entire phosphor screen and together generate an image thereon. The phosphor screen is preferably a monochromatic phosphor screen of material emitting light of essentially one colour by absorption of electrons. As there is no intentional delay of the modulation one electron source relative to the modulation of any one of the other electron sources, the delay is so short that the images produced by the individual electron beams can be observed as one superposed image. Notably, the delay between the modulations of the respective electron beams is much less than the decay time of the light intensity generated in the phosphor screen 4. In this composite image the brightness of the moving spot on the phosphor screen is generated by the superposition of the three electron beams arriving at the moving spot. Overloading of the phosphor material may optionally be counteracted by delaying the modulation of one of the electron beams 231 relative to the modulation of at least one of the other the electron beams 232,233. Moreover, the delay reduces interactions between the modulations of the individual electron beams.

Notably, according to the invention, the regulable analogue amplifiers and the regulable DC voltage supplies are adjusted in such a way that the light intensity L (usually measured in cd.m$^{-2}$ at the moving spot on the phosphor screen where the three electron beams impinge on the phosphor relates to the signal level V (usually in Volts) of the electronic video signal as follows

$$L = (a + bV)^{\gamma}$$

Here the black level parameter a controls the black level, i.e. the light intensity at the phosphor screen when the electron beams have minimum intensity, corresponding to the minimum value of the signal level of the electronic video signal which corresponds to the darkest portions of the image. The black level parameter a is mainly controlled by the DC voltages supplied by the regulable DC voltage supplies 14,15,16. The white level parameter b controls the gain of the light intensity in the brightest portions of the image. At such high brightness portions the white level parameter b is mainly controlled by the amplification ratios of the regulable analogue amplifiers. The exponent $\gamma$ is usually named the 'gamma-parameter' and controls the distribution of brightness levels on the phosphor screen between the black level and the maximum brightness. Preferably, the regulable analogue amplifiers and the regulable DC voltage supplies are adjusted so that $\gamma=3.72$. It has appeared that this yields a brightness distribution that is very comfortable to study x-ray images that are displayed. The display device according to the invention, in particular when adjusted so as to have $\gamma=3.72$ or at least having $\gamma$ in the range 3.35 to 4.09 displays x-ray images with a high diagnostic quality so that the radiologist can easily and clearly observe small details with low contrast. The radiologist can thus more readily perceive such details.

## Claims

1.    A display device comprising

   -    a cathode system (3) including a grid (29) and three cathodes for emitting three separate electron beams (231,232,233), each cathode having an individual electron source (21,22,23),
   -    a phosphor screen (4) placed opposite the cathodes,
   -    an electro-magnetic deflection system (6) for scanning at least a part of the phosphor screen (4) with the electron beams (231,232,233) and arranged such that the electro-magnetic deflection system (6) converges the three electron beams (231,232,233) to a single moveable spot on the phosphor screen (4),
   -    a cathode modulator (5) having a signal input (50) for receiving an analogue electrical video signal and having an output for applying separate modulation voltages to the respective electron sources (21,22,23) of the cathodes (3) relative to the grid (29),

   **characterized in that**

   -    the cathode modulator (5) is provided with three regulable analogue amplifiers (11,12,13),
   -    each regulable analogue amplifier (11,12,13) having a signal input for receiving the same analogue electrical video signal,
   -    each regulable analogue amplifier (11,12,13) having a signal output for supplying one of said modulation voltages,

- each regulable analogue amplifier (11,12,13) having a control input, the amplification ratio of each regulable analogue amplifier being regulable on the basis of a regulating signal applied to the control input of said analogue amplifier (11,12,13), and **in that**
- the cathode modulator (5) is provided with an integrator circuit (17) having an input for receiving the analogue electrical video signal and having an output for supplying said three regulating signals, the integrator circuit (17) being arranged to derive an integrated video signal from the analogue electrical video signal and to derive the three regulating signals from the integrated video signal,
- the integrator circuit (17) having its output coupled to the respective control inputs of the three regulable analogue amplifiers (11,12,13) so as to apply the respective regulating signals to the respective control inputs of the individual regulable analogue amplifiers (11,12,13).

2. A display device as claimed in Claim 1, **characterized in that**

 - the cathode modulator (5) is provided with three regulable voltage supplies (14,15,16), each regulable voltage supply being electrically connected to one of the electron sources (21,22,23) of one of the cathodes (3), each regulable voltage supply having a voltage control input, each regulable voltage supply (14,15,16) being arranged to supply a DC voltage having an adjustable voltage level, each of said voltage levels being dependent on respective voltage control signals applied to the respective voltage control inputs of said respective regulable voltage supply and **in that**,
 - the cathode modulator is provided with a DC regulator (18) having an input electrically connected to the output of the integrator circuit (17) and having an output electrically connected to each individual regulable voltage supply (14,15,16),
 - the DC regulator (18) being arranged to derive said three voltage control signals from the integrated video signal.

3. A display device as claimed in Claim 1 or 2, **characterized in that**

 - the cathode modulator (5) is arranged to energise only one of the cathodes (3) provided the signal level of the integrated video signal is less than a predetermined threshold value.

4. A display device as claimed in any one of the preceding Claims, **characterized in that**

 - the cathode modulator (5) is arranged to energise all three cathodes (3, 21,22,23) provided that the signal level of the integrated video signal exceeds a predetermined ceiling value.

**Patentansprüche**

1. Wiedergabeeinrichtung mit

 - einem Kathodensystem (3), das ein Gitter (29) und drei Kathoden enthält, um drei separate Elektronenstrahlenbündel (231, 232, 233) zu emittieren, wobei jede Kathode eine individuelle Elektronenquelle (21, 22, 23) hat,
 - einem gegenüber den Kathoden angeordneten Leuchtschirm (4),
 - einem elektromagnetischen Ablenksystem (6) zum Abtasten zumindest eines Teils des Leuchtschirms (4) mit den Elektronenstrahlenbündeln (231, 232, 233) und so angeordnet, dass das elektromagnetische Ablenksystem (6) die drei Elektronenstrahlenbündel (231, 232, 233) in einem einzigen bewegbaren Fleck auf dem Leuchtschirm (4) konvergieren lässt,
 - wobei ein Kathodenmodulator (5) einen Signaleingang (50) zum Empfangen eines analogen elektrische Videosignals aufweist und einen Ausgang zum Anlegen separater Modulationsspannungen an die jeweiligen Elektronenquellen (21, 22, 23) der Kathoden (3) relativ zum Gitter (29) aufweist,

 **dadurch gekennzeichnet, dass**

 - der Kathodenmodulator (5) mit drei regelbaren analogen Verstärkern (11, 12, 13) versehen ist,
 - wobei jeder regelbare analoge Verstärker (11, 12, 13) einen Signaleingang zum Empfangen des analogen elektrische Videosignals aufweist,
 - wobei jeder regelbare analoge Verstärker (11, 12, 13) einen Signalausgang zum Abgeben einer der genannten Modulationsspannungen aufweist,
 - wobei jeder regelbare analoge Verstärker (11, 12, 13) einen Steuereingang aufweist, wobei das Verstärkungsverhältnis jedes regelbaren analogen Verstärkers auf Basis eines regelnden Signals, das dem Steuereingang des genannten analogen Verstärkers (11, 12, 13) zugeführt wird, regelbar ist und dass
 - der Kathodenmodulator (5) mit einer Integratorschaltung (17) versehen ist, die einen Eingang zum Empfangen des analogen elektrischen Videosignals und einen Ausgang zum Abgeben der genannten drei regelnden Signale aufweist, wobei die Integratorschaltung (17) zum Ableiten eines integrierten Videosignals aus dem analogen elektrischen Videosignal und zum Ableiten der drei regelnden Signale aus dem integrierten Videosignal ausgebildet ist,

- wobei der Ausgang der Integratorschaltung (17) mit den jeweiligen Steuereingängen der drei regelbaren analogen Verstärker (11, 12, 13) gekoppelt ist, um die jeweiligen regelnden Signale den jeweiligen Steuereingängen der einzelnen regelbaren analogen Verstärker (11, 12, 13) zuzuführen.

2. Wiedergabeeinrichtung nach Anspruch 1, **dadurch gekennzeichnet, dass**

- der Kathodenmodulator (5) mit drei regelbaren Spannungsversorgungen (14, 15, 16) versehen ist, wobei jede regelbare Spannungsversorgung mit einer der Elektronenquellen (21, 22, 23) einer der Kathoden (3) elektrisch verbunden ist, wobei jede regelbare Spannungsversorgung einen Spannungssteuereingang aufweist, wobei jede regelbare Spannungsversorgung (14, 15, 16) ausgebildet ist, um eine Gleichspannung mit einem einstellbaren Spannungspegel abzugeben, wobei jeder der genannten Spannungspegel von jeweiligen Spannungssteuersignalen abhängig ist, die den jeweiligen Spannungssteuereingängen der genannten jeweiligen regelbaren Spannungsversorgung zugeführt werden, und dass
- der Kathodenmodulator mit einem Gleichstromregler (18) versehen ist, der einen mit dem Ausgang der Integratorschaltung (17) elektrisch verbundenen Eingang hat und einen mit jeder einzelnen regelbaren Spannungsversorgung (14, 15, 16) elektrisch verbundenen Ausgang hat,
- wobei der Gleichstromregler (18) zum Ableiten der genannten drei Spannungssteuersignale aus dem integrierten Videosignal ausgebildet ist.

3. Wiedergabeeinrichtung nach Anspruch 1 oder 2, **dadurch gekennzeichnet, dass**

- der Kathodenmodulator (5) zum Erregen nur einer der Kathoden (3) ausgebildet ist, vorausgesetzt, der Signalpegel des integrierten Videosignals ist kleiner als ein zuvor bestimmter Schwellenwert.

4. Wiedergabeeinrichtung nach einem der vorhergehenden Ansprüche, **dadurch gekennzeichnet, dass**

- der Kathodenmodulator (5) zum Erregen aller drei Kathoden (3, 21, 42, 23) ausgebildet ist, vorausgesetzt, dass der Signalpegel des integrierten Videosignals einen zuvor bestimmten oberen Wert überschreitet.

## Revendications

1. Dispositif de reproduction d'images comprenant

- un système cathodique (3) comprenant une grille (29) et trois cathodes pour émettre trois faisceaux d'électrons séparés (231, 232, 233), chaque cathode présentant une source d'électrons individuelle (21, 22, 23),
- un écran luminescent (4) disposé en face des cathodes,
- un système de déviation électromagnétique (6) pour le balayage d'au moins une partie de l'écran luminescent (4) avec les faisceaux d'électrons (231, 232, 233) et disposé de façon que le système de déviation électromagnétique (6) converge les trois faisceaux d'électrons (231, 232, 233) vers un seul spot mobile sur l'écran luminescent (4),
- un modulateur de cathode (5) présentant une entrée de signal (50) pour la réception d'un signal vidéo électrique analogique et présentant une sortie pour l'application de tensions de modulation séparées aux sources d'électrons respectives (21, 22, 23) des cathodes (3) par rapport à la grille (29),

**caractérisé en ce que**

- le modulateur de cathode (5) est muni de trois amplificateurs analogiques réglables (11, 12, 13),
- chaque amplificateur analogique réglable (11, 12, 13) présentant une entrée de signal pour la réception du signal vidéo électrique analogique
- chaque amplificateur analogique réglable (11, 12, 13) présentant une sortie de signal pour fournir l'une desdites tensions de modulation
- chaque amplificateur analogique réglable (11, 12, 13) présentant une entrée de commande, le rapport d'amplification de chaque amplificateur analogique étant réglable à base d'un signal de réglage appliqué à l'entrée de commande dudit amplificateur analogique (11, 12, 13) et **en ce que**
- le modulateur de cathode (5) est muni d'un circuit d'intégration (17) présentant une entrée pour la réception du signal vidéo électrique analogique et présentant une sortie pour fournir lesdits trois signaux de réglage, le circuit d'intégration (17) étant disposé pour dériver un signal vidéo intégré à partir du signal vidéo électrique analogique et pour dériver les trois signaux de réglage à partir du signal vidéo intégré

- la sortie du circuit d'intégration (17) est couplée aux entrées de commande respectives des trois amplificateurs analogiques réglables (11, 12, 13) de façon à appliquer les signaux de réglage respectifs aux entrées de commande respectives des amplificateurs analogiques réglables individuels (11, 12, 13).

2. Dispositif de reproduction d'images selon la revendication 1, **caractérisé en ce que**

- le modulateur de cathode (5) est muni de trois alimentations de tension réglables (14, 15, 16), chaque alimentation de tension réglable étant connectée électriquement à l'une des sources d'électrons (21, 22, 23) de l'une des cathodes (3), chaque alimentation de tension réglable présentant une entrée de commande de tension, chaque alimentation de tension réglable (14, 15, 16) étant disposée pour l'alimentation d'une tension continue présentant un niveau de tension réglable, chacun desdits niveaux de tension étant tributaire des signaux de commande de tension respectifs appliqués aux entrées de commande de tension respectives de ladite alimentation de tension réglable respective et **en ce que**
- le modulateur de cathode est muni d'un régulateur de courant continu (18) présentant une entrée connectée électriquement à la sortie du circuit d'intégration (17) et présentant une sortie connectée électriquement à chaque alimentation de tension réglable individuelle (14, 15, 16),
- le régulateur de courant continu (18) étant disposé pour dériver lesdits trois signaux de commande de tension à partir du signal vidéo intégré.

3. Dispositif de reproduction d'images selon la revendication 1 ou 2, **caractérisé en ce que**

- le modulateur de cathode (5) est disposé pour exciter seule l'une des cathodes (3) à condition que le niveau de signal du signal vidéo intégré soit inférieur à une valeur de seuil préalablement déterminée.

4. Dispositif de reproduction d'images selon l'une des revendications précédentes, **caractérisé en ce que**

- le modulateur de cathode (5) est disposé pour exciter toutes les trois cathodes (3, 21, 22, 23) à condition que le niveau de signal du signal vidéo intégré dépasse une valeur maximale préalablement déterminée.